# EUROPEAN PATENT SPECIFICATION

(11) **EP 1 422 506 B1**
(45) Date of publication and mention of the grant of the patent: **11.01.2006**
(21) Application number: 02425711.5
(22) Date of filing: 19.11.2002
(51) Int. Cl.: G01M 3/38

(54) **A method for testing the internal tightness of a heat exchanger**
Methode zum Testen der internen Dichtigkeit von Wärmetauschern
Procédé d'essais d'étancheité interne des échangeurs de chaleur

(43) Date of publication of application: 26.05.2004
(73) Proprietor: DENSO THERMAL SYSTEMS S.p.A., 10046 Poirino (Torino) (IT)
(72) Inventor: Ronco, Sergio, 10023 Chieri (IT)
(74) Representative: Marchitelli, Mauro

(56) References cited:
- DE-A- 19 613 560
- US-A- 4 947 931
- US-A- 5 548 400
- US-B1- 6 452 670
- PATENT ABSTRACTS OF JAPAN vol. 1998, no. 06, 30 April 1998 (1998-04-30) & JP 10 038745 A (UMEOKA RADIATOR KOGYOSHO:KK), 13 February 1998 (1998-02-13)

## Description

The present invention relates to a method for testing the internal tightness of a heat exchanger.

The present invention has been developed in particular for testing the internal tightness of heat-exchangers for motor vehicles, comprising a plurality of pipes designed to be traversed by a flow of liquid and connected to at least one manifold tank provided with at least one diaphragm, which divides the internal space of the manifold tank into at least two chambers provided with respective openings for inlet and outlet of the flow of liquid.

In heat-exchangers of the above kind, there are two types of tightness: tightness towards the outside of the heat exchanger, and internal tightness. In a heat exchanger in which the inlet and outlet of the fluid flow are on said manifold tank, an internal loss brings about the passage of part of the flow of liquid directly from the inlet opening towards the outlet opening. Said loss reduces the quantity of flow that effectively traverses the pipes of the heat exchanger and leads to a reduction in heat-exchange efficiency.

Checking of the tightness towards the outside can be performed in a relatively simple and fast way, for example, as described by JP-A-10038745, by pressurizing the heat exchanger with a flow of gas and measuring the reduction in pressure of the gas. A measurement of this type can be automated in a relatively simple way, so that in lines for the production of heat-exchangers for motor vehicles there is usually provided a station for testing tightness towards the outside.

Testing of internal tightness is, instead, decidedly more laborious. The system of internal testing usually adopted consists in setting the heat exchanger in a vertical position, with the two openings oriented downwards. One of the two openings is connected to a supply of liquid with a head having a height smaller than the height of the heat exchanger. After a sufficient length of time for obtaining filling of the pipes, the internal leakage is noted by measuring the quantity of liquid that comes out of the other opening in a pre-determined time interval. This type of testing involves very long time intervals. Consequently, it is usually carried out off the assembly line and on a statistical basis. The long time intervals necessary for testing the internal tightness with a measuring system employing a liquid head renders a check on the assembly line of each heat exchanger produced practically impossible.

US-A-5548400 discloses a method for inspecting honeycomb structures by transmitting a beam of light into a first cell of the honeycomb structure by an optical fibre and simultaneously detecting any light which leaks from the first cell into an adjacent cell.

The object of the present invention is to provide a simple, rapid and reliable method for checking the internal tightness of a heat exchanger.

According to the present invention, this object is achieved by a method having the characteristics forming the subject of the ensuing claims.

The present invention will now be described in detail with reference to the attached drawings, which are provided purely by way of non-limiting example and in which:
- Figure 1 is a side view of a heat exchanger for motor vehicles; and
- Figure 2 is a schematic view illustrating the method for testing internal tightness of the heat exchanger as illustrated in Figure 1.

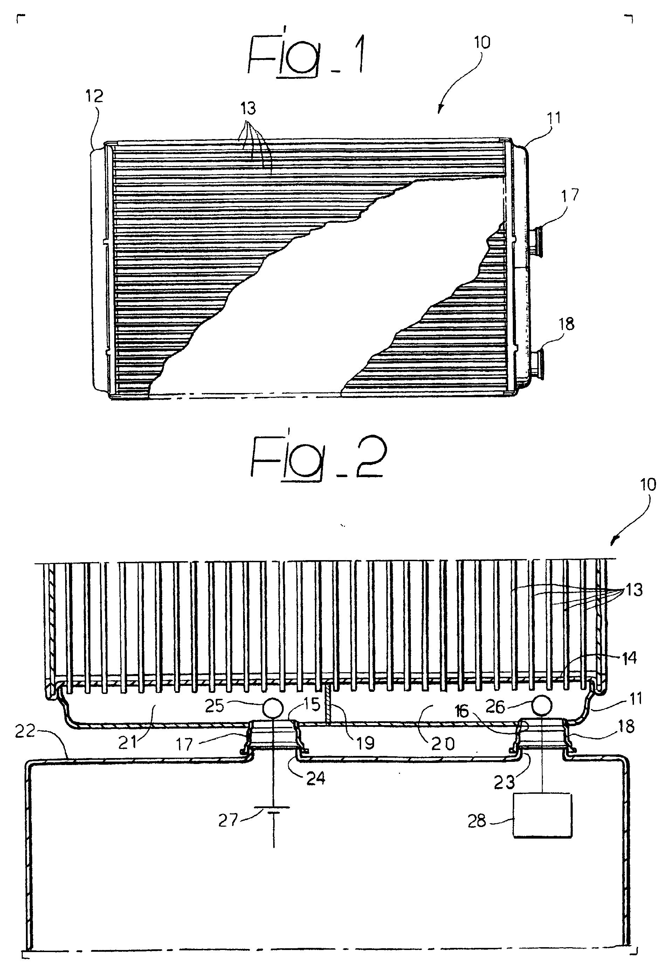

With reference to Figure 1, the number 10 designates a heat exchanger for vehicles comprising two manifold tanks 11, 12, between which there extend a plurality of pipes 13 forming a heat-exchange block.

With reference to Figure 2, the manifold tank 11 comprises a bottom plate 14, through which there extend the ends of the pipes 13, which are set in fluid communication with the internal space of the tank 11. The tank 11 is provided with two openings 15, 16 associated to respective connectors 17, 18 for connection to pipes (not illustrated) for inlet and outlet of a flow of heat-exchange fluid. A separating diaphragm 19 is fixed in a fluid-tight way on the inside of the manifold tank 11 and divides the internal space of the manifold tank into two chambers 20, 21.

Typically, a heat exchanger of the above type is produced using an oven-brazing technology. The separating diaphragm 19 is coated with brazing alloy and is positioned between the bottom plate 14 and the manifold tank 11. During oven brazing, the brazing alloy welds the separating diaphragm 19 along its perimeter to the bottom plate 14 and to the manifold tank 11. During the said brazing step, the ends of the pipes 13 are welded to the bottom plate 14, and the manifold tank 11 is welded to the bottom plate 14.

Figures 1 and 2 illustrate a heat exchanger provided with a separating diaphragm 19, which extends in a direction transverse to the longitudinal axis of the manifold tank 11. The method according to the present invention can be used also on heat-exchangers in which the separating diaphragm extends in a direction longitudinal with respect to the manifold tank 11. The method for testing internal tightness according to the present invention can be applied to any heat exchanger provided with at least one manifold tank 11 in which there is provided at least one separating diaphragm that divides the internal space of the manifold tank into at least two chambers.

The finished heat exchanger 10, i.e., at the end of the brazing operation, is subjected to a testing method according to the present invention. Said testing method uses a device including a supporting surface 22 provided with openings 23, 24, which are equipped with respective connectors designed for engaging the connectors 17, 18 of the heat exchanger 10. The testing device comprises a source of light radiation 25 and a detecting element 26 sensitive to the light radiation emitted by the source 25. The source of light radiation 25 and the detecting element 26 are in a fixed position with respect to the surface 22 and project from the surface in such a way that when the radiator 10 is positioned with the connectors 17, 18 engaged with the openings 23, 24 of the surface 22, the source 25 and the receiving element 26 extend inside the respective chambers 21, 20.

The light-radiation source 25 is connected to an electrical-supply device 27. The detecting element 26 is connected to a device for receiving a signal 28, which receives an electrical signal emitted by the detecting element 26 and issues a signal indicating the level of internal tightness of the heat exchanger 10. The source of light radiation 25 can emit infrared, ultraviolet or else visible-light radiation. The present applicant has found experimentally that the light intensity received by the detecting element 26 is proportional to the internal losses of liquid through the diaphragm 19. In fact, the only direct communication between the chambers 20, 21, through which the light radiation emitted by the source 25 can propagate, is represented by the imperfections of tightness along the perimeter of the diaphragm 19. Consequently, a measurement of the level of light intensity received by the detecting element 26 provides a precise indication of the level of internal leakage, i.e., of the quantity of fluid which, in use, would pass directly from one of the two chambers 20, 21 to the other, without traversing the pipes 13.

Testing of internal tightness by means of emission and reception of light radiation enables nondestructive testing of the internal tightness of a heat exchanger, without having to introduce a fluid inside the heat exchanger. Consequently, this type of testing is extremely rapid and can be carried out systematically on each heat exchanger manufactured. In addition, this testing method can easily be automated and provides a precise measurement of the level of internal tightness. A further advantage of the method according to the present invention lies in the fact that the above measurement can be made simultaneously with the measurement of external tightness, which consists in introducing a flow of gas inside the heat exchanger. In fact, the light source 25 and the receiving element 26 are not affected by the presence of a gas under pressure. Consequently, testing of internal tightness can be performed while the heat exchanger 10 is pressurized for carrying out the testing of the tightness towards the outside, without therefore increasing the time for the cycle of production of the heat exchanger.

## Claims

1. A method for testing the internal tightness of a heat exchanger comprising at least one manifold tank (11) provided with at least one separating diaphragm (19), which divides the internal space of the manifold tank (11) into at least two chambers (20, 21), the method being **characterized by** emitting light radiation in one of said chambers (20, 21), determining the internal tightness of the heat exchanger according to the intensity of the light radiation received in the other chamber (20, 21) and simultaneously testing external tightness by pressurizing the heat exchanger.

2. The method according to Claim 1, **characterized in that** it comprises the steps of inserting, in the aforesaid chambers (20, 21), a source of light radiation (25) and a detecting element (26) sensitive to the light radiation emitted by said source (25).

3. The method according to Claim 2, **characterized in that** said detecting element (26) is connected to a circuit (28) designed for receiving an electrical signal coming from said detecting element (26) and for issuing a signal indicating the degree of internal tightness of the heat exchanger according to the intensity of the electrical signal received by said detecting element (26).

## Patentansprüche

1. Verfahren zum Testen der internen Dichtigkeit eines Wärmetauschers, der wenigstens einen Verteilertank (11) umfasst, der mit wenigstens einer Scheidewand (19) versehen ist, die den Innenraum des Verteilertanks (11) in wenigstens zwei Kammern (20, 21) teilt, wobei das Verfahren **gekennzeichnet ist durch**:
Aussenden von Lichtstrahlung in eine der Kammern (20, 21), Bestimmen der internen Dichtigkeit des Wärmetauschers gemäß der Intensität der in der anderen Kammer (20, 21) empfangenen Lichtstrahlung und gleichzeitig Testen der externen Dichtigkeit durch Druckbelüften des Wärmetauschers.

2. Verfahren gemäß Anspruch 1, **dadurch gekennzeichnet, dass** es die Schritte Einsetzen einer Lichtstrahlungsquelle (25) und eines auf die von der Quelle (25) ausgesendete Lichtstrahlung ansprechenden Messfühlers (26) in die vorgenannten Kammern (20, 21) umfasst.

3. Verfahren gemäß Anspruch 2, **dadurch gekennzeichnet, dass** der Messfühler (26) an eine Schaltung (28) angeschlossen ist, die dazu ausgelegt ist, ein von dem Messfühler (26) kommendes elektrisches Signal aufzunehmen und ein Signal abzugeben, das den internen Dichtigkeitsgrad des Wärmetauschers gemäß der Intensität des von dem Messfühler (26) empfangenen elektrischen Signals anzeigt.

## Revendications

1. Procédé pour tester l'étanchéité interne d'un échangeur thermique comprenant au moins un réservoir de collecteur (11) pourvu d'au moins un diaphragme de séparation (19), qui divise l'espace interne du réservoir de collecteur (11) en au moins deux chambres (20, 21), le procédé étant **caractérisé en ce qu'**il comprend les étapes consistant à émettre un rayonnement lumineux dans une desdites chambres (20, 21), déterminer l'étanchéité interne de l'échangeur thermique selon l'intensité du rayonnement lumineux reçu dans l'autre chambre (20, 21) et tester simultanément l'étanchéité externe en mettant l'échangeur thermique sous pression.

2. Procédé selon la revendication 1, **caractérisé en ce qu'**il comprend les étapes consistant à insérer, dans lesdites chambres (20, 21), une source de rayonnement lumineux (25) et un élément de détection (26) sensible au rayonnement de lumière émis par ladite source (25).

3. Procédé selon la revendication 2, **caractérisé en ce que** ledit élément de détection (26) est raccordé à un circuit (28) destiné à recevoir un signal électrique provenant dudit élément de détection (26) et pour émettre un signal indiquant le degré d'étanchéité interne de l'échangeur thermique selon l'intensité du signal électrique reçu par ledit élément de détection (26).
